# EUROPÄISCHE PATENTSCHRIFT

(11) **EP 1 219 505 B1**
(45) Veröffentlichungstag und Bekanntmachung des Hinweises auf die Patenterteilung: **07.09.2005**
(21) Anmeldenummer: 01130899.6
(22) Anmeldetag: 27.12.2001
(51) Int. Cl.: B60R 21/16

(54) **Gassackmodul**
Air bag module
Module de sac de sécurité gonflable

(30) Priorität: 28.12.2000 DE 20022017 U
(43) Veröffentlichungstag der Anmeldung: 03.07.2002
(73) Patentinhaber: TRW Automotive Safety Systems GmbH, 63743 Aschaffenburg (DE)
(72) Erfinder: Lorenz, Christian, 63849 Leidersbach 3 (DE); Neupert, Ralph, 63839 Kleinwallstadt (DE)
(74) Vertreter: Kitzhofer, Thomas

(56) Entgegenhaltungen:
- DE-A- 3 630 685
- US-A- 5 887 894
- US-A- 6 042 147

## Beschreibung

Die Erfindung betrifft ein Gassackmodul, mit einem Gassack, dessen Außenkontur durch eine Gassackwand definiert ist, wobei die Gassackwand eine Vorderwand zum Aufprall des Insassen und eine von der Vorderwand ausgehende Einbuchtung hat, welche dadurch gebildet ist, daß ein Zentrumsabschnitt der Gassackwand beim Aufblasen an einer freien Bewegung gehindert und zurückgehalten wird, wobei der Gassack um die Einbuchtung herum eine ringförmige, mit Gas zu befüllende Kammer aufweist.

Derartige ringförmige Gassäcke haben den Vorteil, daß der Zentrumsabschnitt an einer Bewegung in Richtung zum Insassen gehindert wird, indem er am Modul befestigt bleibt. Die Rückhaltung erfolgt dann über die ringförmige Vorderwand um die Einbuchtung herum. Ein solcher Gassack hat sehr gute Rückhaltewerte. Die Einbuchtung soll so klein wie möglich sein, damit der Insasse mit dem Kopf nicht in die Einbuchtung gelangen kann.

US 6 042 147 A offenbart ein Gassackmodul gemäß dem Oberbegriff des Anspruchs 1.

Die Erfindung schafft ein Gassackmodul, bei dem die Einbuchtung sicher wenigstens teilweise, vorzugsweise vollständig geschlossen wird.

Dies wird bei einem Gassackmodul der eingangs genannten Art dadurch erreicht, daß in der Einbuchtung wenigstens ein Fangband vorgesehen ist, das sich längs der Einbuchtung erstreckt und wenigstens mit seinem, bezogen auf den aufgeblasenen Zustand des Gassacks, aus der Einbuchtung herausweisenden Ende an der Gassackwand befestigt ist. Durch das wenigstens eine in der Einbuchtung angeordnete Fangband wird die Einbuchtung im Bereich desjenigen Endes des Fangbandes, das aus der Einbuchtung herausweist, vorzugsweise vollständig geschlossen. Herausweisen heißt in diesem Zusammenhang nicht, daß das entsprechende Ende aus der Einbuchtung herausragen muß, sondern nur, daß es das nach außen weisende Ende ist. Der Gassack selbst ist vorzugsweise ein im Lenkrad oder im Armaturenbrett untergebrachter Front-Gassack, der bei einem Frontalaufprall aufgeblasen wird.

Gemäß der bevorzugten Ausführungsform ist das Fangband im Bereich des Übergangs von der Vorderwand zur Einbuchtung an der Gassackwand befestigt. Das Fangband zieht damit den Bereich der Gassackwand, an dem es befestigt ist, vorzugsweise radial einwärts, in die Einbuchtung hinein, so daß diese in ihrem Querschnitt verringert wird.

Darüber hinaus ist es jedoch auch möglich, ein kurzes Fangband vorzusehen, so daß die Gassackwand nach dem nach außen weisenden Ende des Fangbandes radial einwärts durch den Gasdruck ausbaucht oder, mit anderen Worten, von allen Seiten radial einwärts zusammenfällt, so daß eine nach außen geschlossene Wand im vollständig aufgeblasenen Zustand vorhanden ist, auf die der Insasse prallen kann.

Vorzugsweise sind mehrere Fangbänder vorgesehen, die während des Aufblasens schräg in der Einbuchtung verlaufen und eine seitliche Zugkraft auf die Gassackwand ausüben, die ein Schließen der Einbuchtung hervorruft.

In diesem Zusammenhang ist zu betonen, daß unter Umständen ein vollständiges Schließen, so daß überhaupt gar kein Durchlaß mehr vorhanden ist, gegebenenfalls aufgrund der Steifigkeit des Gassackgewebes nicht möglich ist. Es können deshalb vereinzelt noch minimale Durchlässe von außen in die Einbuchtung hinein auftreten.

Die Fangbänder verlaufen im annähernd voll (d.h. noch nicht ganz voll) aufgeblasenen Zustand Y- oder X-förmig, damit die seitliche Zugkraft aufgebracht werden kann. Der Schnittwinkel der Fangbänder zueinander ändert sich im Verlauf des weiteren Aufblasvorgangs insofern, als er sich bis zum vollständig aufgeblasenen Zustand verringert. Das bedeutet, im vollständig aufgeblasenen Zustand können die beispielsweise X-förmig zueinander verlaufenden Fangbänder so zueinander stehen, daß sie in einer Seitenansicht ein umgedrehtes "V" bilden.

Bei einem Y-förmigen Fangband ist vorgesehen, daß sich ein Fangband vom modulseitigen Ende der Einbuchtung vor der Anbindung an die Gassackwand der Einbuchtung in mehrere Fangbänder aufteilt, z.B. indem mehrere Fangbänder an dem einen Fangband angenäht sind. Die mehreren Fangbänder liegen vorzugsweise im vollständig aufgeblasenen Zustand aneinander an oder fast aneinander an, wenn die Fangbänder die Einbuchtung zugezogen haben.

Der Gassack besteht gemäß der bevorzugten Ausführungsform aus mehreren Gewebeteilen, wobei das die Vorderwand bildende Gewebeteil eine zentrische Öffnung zur Bildung des Übergangs zur Einbuchtung bildet. Diese Öffnung ist vorzugsweise schlitzförmig ausgeführt, was das selbsttätige Verschließen der Einbuchtung erleichtert.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 eine Querschnittsansicht durch ein erfindungsgemäßes Gassackmodul mit fast vollständig aufgeblasenem Gassack,
- Fig. 2 eine Querschnittsansicht durch das Gassackmodul nach Fig. 1 mit vollständig aufgeblasenem Gassack,
- Fig. 3 eine Querschnittsansicht durch eine andere Ausführungsform, wobei der Gassack noch nicht vollständig aufgeblasen ist,
- Fig. 4 eine Querschnittsansicht durch das Gassackmodul nach Fig. 3 mit vollständig aufgeblasenem Gassack,
- Fig. 5 eine Draufsicht auf die Gassäcke nach den Fig. 2 und 4, und
- Fig. 6a bis 6f Draufsichten auf verschiedene Ausführungsformen des Gassacks des erfindungsgemäßen Moduls mit verschiedenen Zuschnitten der Vorderwand.

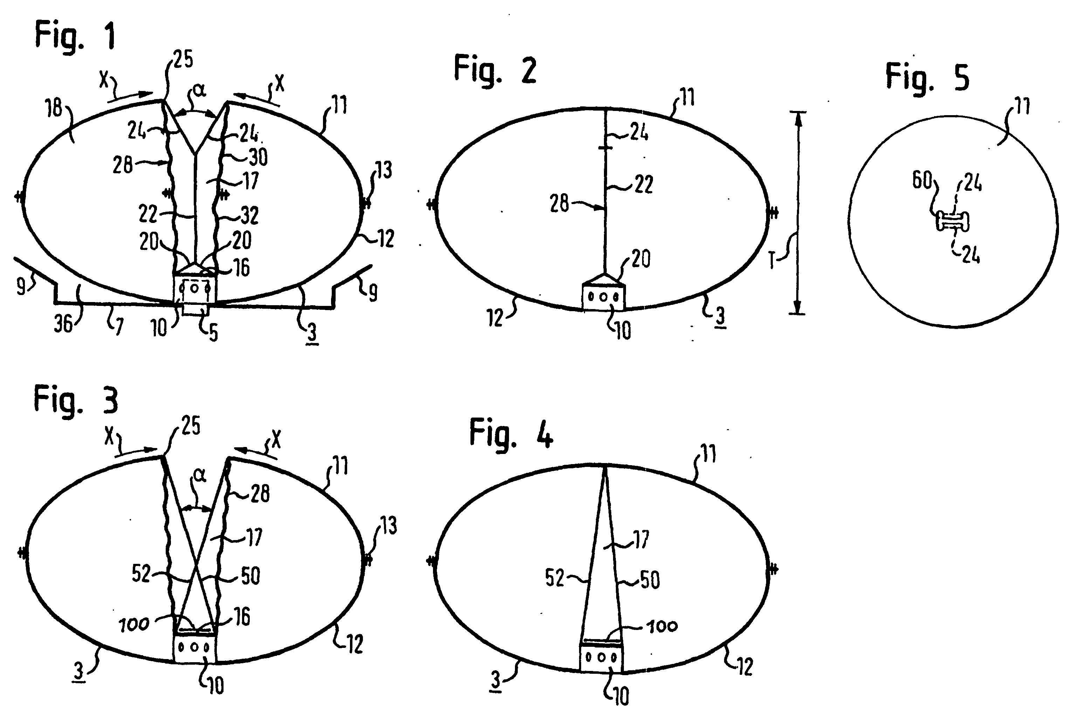

In Fig. 1 ist ein im Lenkrad untergebrachtes Gassackmodul dargestellt, das einen Gassack 3, einen Gasgenerator 5 und ein Modulgehäuse 7 mit einer Modulabdeckung 9 aufweist. Der Gasgenerator 5 wird von einem topf- oder glockenförmigen Diffusor 10 umgeben, der von oben über den Gasgenerator 5 gestülpt ist und am Modul, genauer am Modulgehäuse 7 befestigt ist. Anstatt des Diffusors 10 kann jedoch auch ein anderes, den Gasgenerator 5 umgebendes Halteteil vorgesehen sein.

Der Gassack hat eine Gassackwand, die mehrere Gewebeteile aufweist. Der Gassack hat eine Vorderwand 11, die dem Insassen im aufgeblasenen Zustand zugewandt ist und ihn zurückhält. Darüber hinaus ist eine Rückwand 12 vorgesehen. Vorderwand 11 und Rückwand 12 bestehen aus ringförmigen Gewebeteilen, die an einer Umfangsnaht 13 miteinander verbunden sind. Von der Vorderwand 11 aus erstreckt sich in der Mitte des Gassacks, also im Zentrum, eine Einbuchtung 17, die nach oben offen ist, in Richtung Gasgenerator 5. Die Einbuchtung 17 ist dadurch gebildet, daß ein Abschnitt der Gassackwand, im folgenden Zentrumsabschnitt 16 genannt, an einer ungehinderten, vorzugsweise an jeglicher Bewegung aus dem Modul heraus im Rückhaltefall gehindert wird. Dadurch entsteht eine ringförmige, aufzublasende, mit Gas zu befüllende Kammer 18. Die Einbuchtung 17 wird nicht mit dem Gas des Gasgenerators 5 befüllt.

Die Modulabdeckung weist einen über dem Zentrumsabschnitt 16 liegenden scheibenförmigen Mittelteil 100 (siehe Fig. 3, 4) auf, der bleibend am Diffusor 10 befestigt ist und im Gegensatz zu einer ringförmigen Klappe auch beim Öffnen des Moduls nicht nach außen klappt. Der Zentrumsabschnitt 16 wird über die Befestigung des Mittelteils 100 auch am Diffusor 10 bleibend befestigt. Alternativ könnten der Diffusor 10 und das Mittelteil 100 auch weggelassen und der Zentrumsabschnitt 16 direkt am Gasgenerator 5 befestigt werden.

In der Einbuchtung ist ein sich längs der Einbuchtung 17 erstreckendes Fangband, genauer gesagt eine Fangbandanordnung untergebracht. An gegenüberliegenden Abschnitten angrenzend an das Mittelteil 100 ist jeweils ein kurzes Fangband 20 am Zentrumsabschnitt 16 angenäht. Die beiden kurzen Fangbänder 20 laufen aufeinander zu, und an der Verbindungsstelle ist ein langes Fangband 22 angenäht, das sich nach oben, in Richtung aus der Einbuchtung 17 heraus erstreckt. Vor dem Übergang 25 der Vorderwand 11 zur Einbuchtung 17 teilt sich das Fangband 22 nochmal, genauer gesagt werden wieder zwei kurze Fangbänder 24 an das Fangband 22 angenäht. Die oberen Enden der Fangbänder 24 sind am Übergang 25 an der Gassackwand befestigt. Vorzugsweise erfolgt die Befestigung an der die Einbuchtung 17 bildenden schlauchförmigen Gassackwand 28, die aus zwei ringförmigen Gewebeteilen 30, 32 besteht. Das untere Ende des Gewebeteils 32 weist den Zentrumsabschnitt 16 auf.

Im noch nicht vollständig, aber fast vollständig aufgeblasenen Zustand nach Fig. 1 haben die Fangbänder die Gestalt eines doppelten "Y".

Die Funktionsweise des Gassackmoduls nach Fig. 1 wird im folgenden erläutert:

Beim Aufblasen des Gassacks drückt dieser die Abdeckung 9 auf, so daß die Klappen nach außen schwenken und eine ringförmige Austrittsöffnung 36 freigeben, über die der Gassack nach außen gelangt. Der Gassack entfaltet sich weiter, weist aber, solange er nicht vollständig aufgeblasen ist, auf der Vorderwand 11 eine weit geöffnete Einbuchtung 17 auf. Während des Aufblasens jedoch sind die Fangbänder 24 schräg in der Einbuchtung verlaufend angeordnet und üben damit eine seitliche Zugwirkung, wie mit den Pfeilen X gezeigt, auf die Gassackwand aus, an der sie befestigt sind. Diese Zugwirkung ist seitlich nach innen gerichtet, so daß sich die beiden Anbindungsstellen der aus der Einbuchtung 17 herausweisenden Enden der Fangbänder 24 aufeinander zu bewegen. Die Gassackwand 28, die die Einbuchtung 17 definiert, ist in diesem Zustand nicht gespannt. Der Schnittwinkel α der Fangbänder 24 nimmt während des Aufblasens ab. Im vollständig aufgeblasenen Zustand liegen die beiden Fangbänder 24 aneinander an, da sie die Einbuchtung geschlossen haben, wie in Fig. 2 zu erkennen ist.

Bei der in Fig. 3 dargestellten Ausführungsform sind an gegenüberliegenden Ränders des Zentrumsabschnitts 16 Fangbänder 50, 52 angenäht, die schräg nach oben und aneinander vorbei verlaufen, so daß in der Seitenansicht eine X-Form entsteht. Die Fangbänder 50, 52 sind im Bereich des Übergangs 24 der Vorderwand 11 zur Einbuchtung 17 an der Gassackwand angenäht. Dadurch, daß die Fangbänder 50, 52 in der Einbuchtung 17 schräg verlaufen, ergibt sich wieder die bereits erwähnte seitliche Zugwirkung im Bereich der oberen Anbindung an die Gassackwand. Die Anbindungsstellen werden in Pfeilrichtung X aufeinander zu verschoben, so daß beim weiteren Aufblasen die Öffnung der Vorderwand 11 geschlossen wird, wie in Fig. 4 zu sehen ist. Die Fangbänder 50, 52 haben bei vollständig aufgeblasenem Gassack eine umgekehrte "V"-Form, wenn die Einbuchtung 17 nach oben weist.

Die Gassackwand 28, die die Einbuchtung 17 bildet, kann nach innen ausbauchen, so daß sich Abschnitte der Gassackwand einander berühren, teilweise wird die Gassackwand an den Zugbändern 50, 52 anliegen.

Bei der Ausführungsform nach Fig. 2 ist es im übrigen so, daß die Gassackwand 28, die die Einbuchtung 17 definiert, nach innen soweit ausbauchen kann, daß die Einbuchtung 17 sich fast über die gesamte Länge selbsttätig schließt, da die Tiefe T des Gassacks von der Fangbandanordnung festgelegt ist.

In den Fig. 3 und 4 sind im übrigen die bereits im Zusammenhang mit Fig. 1 und 2 erwähnten Teile, sofern sie nicht geändert wurden, mit gleichen Bezugszeichen versehen. Nur aus Gründen der Übersichtlichkeit wurde das Modulgehäuse weggelassen.

Das selbsttätige Schließen möglichst nahe an dem Übergang 25 von der Vorderwand 11 zur Einbuchtung 17 kann im übrigen dadurch unterstützt werden, daß das Gewebeteil, das die Vorderwand 11 bildet, keine kreisrunde Öffnung hat, sondern eine schlitzförmige, wie in Fig. 5 dargestellt ist. In Fig. 5 ist dargestellt, daß die Öffnung ein H-förmiger Schlitz 60 ist, wobei auf beiden Seiten des Zwischenstegs des "H" die Fangbänder 24, alternativ die Fangbänder 50, 52, angenäht sind.

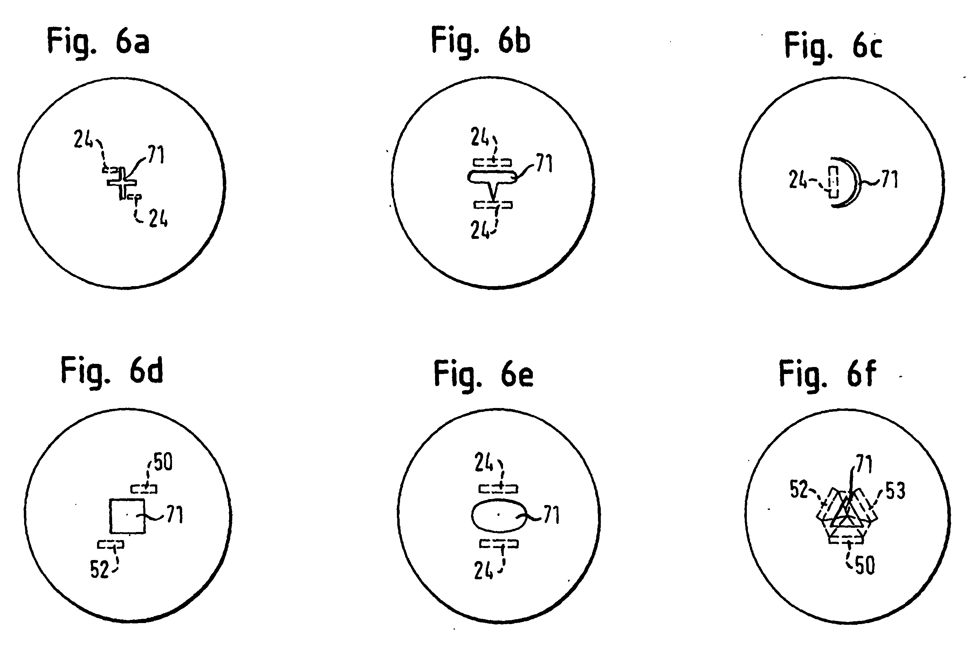

Auch andere Zuschnitte des die Vorderwand 11 bildenden Gewebeteils unterstützen das Schließen. Beispiel für solche Zuschnitte sind in den Fig. 6a bis 6f dargestellt. In Fig. 6a ist eine kreuzförmige Öffnung dargestellt, von der aus die Einbuchtung nach innen verläuft.

Bei der Ausführungsform nach Fig. 6b ist eine T-förmige Öffnung 71 vorgesehen.

Fig. 6c zeigt eine C-förmige Öffnung 71, die gegebenenfalls sogar nur durch ein schräg aufwärts verlaufendes Fangband 24 geschlossen werden könnte.

Bei der Ausführungsform nach Fig. 6d ist eine quadratische Öffnung 71 vorgesehen, wobei die Fangbänder 50, 52, wie zu erkennen ist, zueinander seitlich versetzt sind, um aneinander vorbeilaufen zu können.

Bei der Ausführungsform nach Fig. 6e ist eine ovale Öffnung 71 zu erkennen und bei der Ausbildung nach Fig. 6f eine dreieckige Öffnung 71 mit drei Fangbändern 50, 52, 53. Die Fangbänder sind im Bereich des Zentrumsabschnitts 16 unter Bildung eines Dreieckes am Zentrumsabschnitt 16 vernäht und laufen schräg aufwärts zur Vorderwand 11. Wenn man davon ausgeht, daß die Vorderwand 11 eine dreiecksförmige Öffnung 71 hat, dessen Dreieck in Draufsicht auf dem Dreieck liegt, das durch die vernähten Fangbänder am Zentrumsabschnitt 16 gebildet ist, so ist jedes Fangband mit dem oberen Ende an einem benachbarten Schenkel des Dreiecks angeordnet, so daß die Fangbänder wie ein leicht verdrehtes Bündel von Fangbändern im aufgeblasenen Zustand aussehen. Die Öffnung 71 wird beim Aufblasen dann durch die Zugwirkung, die von den Fangbändern 50, 52, 53 ausgeht, durch Torsion verengt.

## Patentansprüche

1. Gassackmodul mit einem Gassack (3), dessen Außenkontur durch eine Gassackwand definiert ist, wobei die Gassackwand eine Vorderwand (11) zum Aufprall des Insassen und eine von der Vorderwand (11) ausgehende Einbuchtung (17) hat, welche **dadurch** gebildet ist, daß ein Zentrumsabschnitt (16) der Gassackwand beim Aufblasen an einer freien Bewegung gehindert und zurückgehalten wird, wobei der Gassack (3) um die Einbuchtung (17) herum eine ringförmige, mit Gas zu befüllende Kammer (18) aufweist,
**dadurch gekennzeichnet, daß**
in der Einbuchtung (17) wenigstens ein sich längs der Einbuchtung (17) erstreckendes Fangband (20 - 24; 50, 52, 53) vorgesehen ist, das wenigstens mit seinem, bezogen auf den aufgeblasenen Zustand, aus der Einbuchtung (17) herausweisenden Ende an der Gassackwand befestigt ist.

2. Gassackmodul nach Anspruch 1, **dadurch gekennzeichnet, daß** das Fangband (20 - 24; 50, 52, 53) mit seinem aus der Einbuchtung (17) herausweisenden Ende an der die Einbuchtung definierenden Gassackwand befestigt ist.

3. Gassackmodul nach Anspruch 1 oder 2, **dadurch gekennzeichnet, daß** das Fangband (20 - 24; 50, 52, 53) im Bereich des Übergangs von der Vorderwand (11) zur Einbuchtung (17) an der Gassackwand befestigt ist.

4. Gassackmodul nach einem der vorhergehenden Ansprüche, **dadurch gekennzeichnet, daß** mehrere Fangbänder (20 - 24; 50, 52, 53) vorgesehen sind, die während des Aufblasens schräg in der Einbuchtung (17) verlaufen und eine seitliche Zugwirkung auf die Gassackwand ausüben, die ein Schließen der Einbuchtung (17) hervorruft.

5. Gassackmodul nach einem der vorhergehenden Ansprüche, **dadurch gekennzeichnet, daß** mehrere Fangbänder (20 - 24; 50, 52, 53) in annähernd voll aufgeblasenem Zustand des Gassacks Y- oder X-förmig verlaufen und sich der Schnittwinkel (α) der Fangbänder im Verlauf des weiteren Aufblasens bis zum vollständig aufgeblasenen Zustand verringert.

6. Gassackmodul nach Anspruch 5, **dadurch gekennzeichnet, daß** die X-förmig verlaufenden Fangbänder (50, 52) an gegenüberliegenden Rändern des Zentrumsabschnitts (16) befestigt sind, sich in Richtung zur Vorderwand (11) aneinander vorbei erstrecken und im Bereich des Übergangs der Vorderwand (11) zur Einbuchtung (17) an der Gassackwand befestigt sind.

7. Gassackmodul nach Anspruch 6, **dadurch gekennzeichnet, daß**, in der Seitenansicht mit der Einbuchtung (17) nach oben weisend, die Fangbänder (50, 52) bei vollständig aufgeblasenem Gassack ein umgedrehtes "V" bilden.

8. Gassackmodul nach einem der vorhergehenden Ansprüche, **dadurch gekennzeichnet, daß** sich ein Fangband (22) vor der Anbindung an die Gassackwand in mehrere Fangbänder (24) aufteilt.

9. Gassackmodul nach Anspruch 8, **dadurch gekennzeichnet, daß** die mehreren Fangbänder (24) in vollständig aufgeblasenem Zustand aneinanderliegen.

10. Gassackmodul nach einem der vorhergehenden Ansprüche, **dadurch gekennzeichnet, daß** die Gassackwand aus mehreren Gewebeteilen (11, 12, 30, 32) besteht, wobei das die Vorderwand (11) bildende Gewebeteil eine zentrische Öffnung (60; 71) zur Bildung des Übergangs (25) zur Einbuchtung (17) hat und wobei die Öffnung (60; 71) schlitzförmig ausgebildet ist.

## Claims

1. A gas bag module, comprising a gas bag (3) the outer contour of which is defined by a gas bag wall, the gas bag wall having a front wall (11) for impact of the occupant and an indentation (17) proceeding from the front wall (11), the indentation being formed in that a center portion (16) of the gas bag wall is prevented from freely moving during inflation and is restrained, the gas bag (3) having a ring-shaped chamber (18) which is to be filled with gas and is arranged around the indentation (17),
**characterized in that**
provided in the indentation (17) is at least one limiting strap (20 - 24; 50, 52, 53) which extends along the indentation (17) and is attached to the gas bag wall at least by its end pointing out of the indentation (17), as related to the inflated condition.

2. The gas bag module as claimed in claim 1, **characterized in that** the end of the limiting strap (20 - 24; 50, 52, 53) which points out of the indentation (17) is attached to the gas bag wall defining the indentation.

3. The gas bag module as claimed in claim 1 or 2, **characterized in that** the limiting strap (20 - 24; 50, 52, 53) is attached to the gas bag wall in the region of transition from the front wall (11) to the indentation (17).

4. The gas bag module as claimed in any of the preceding claims, **characterized in that** a plurality of limiting straps (20 - 24; 50, 52, 53) is provided which during inflation extend at an angle in the indentation (17) and exert a lateral tensile force on the gas bag wall, which causes a closure of the indentation (17).

5. The gas bag module as claimed in any of the preceding claims, **characterized in that** a plurality of limiting straps (20 - 24; 50, 52, 53) extends in a Y-shape or X-shape in the approximately fully inflated condition of the gas bag and the intersection angle (α) of the limiting straps is reduced in the course of the further inflation up to the completely inflated condition.

6. The gas bag module as claimed in claim 5, **characterized in that** the limiting straps (50, 52) extending in an X-shape are attached to opposing edges of the center portion (16), extend past each other towards the front wall (11) and are attached to the gas bag wall in the region of transition from the front wall (11) to the indentation (17).

7. The gas bag module as claimed in claim 6, **characterized in that**, as viewed from the side with the indentation (17) pointing upwards, the limiting straps (50, 52) form an inverse "V" when the gas bag is completely inflated.

8. The gas bag module as claimed in any of the preceding claims, **characterized in that** one limiting strap (22) is divided into several limiting straps (24) before being connected to the gas bag wall.

9. The gas bag module as claimed in claim 8, **characterized in that** the several limiting straps (24) rest against each other in the completely inflated condition.

10. The gas bag module as claimed in any of the preceding claims, **characterized in that** the gas bag wall consists of a plurality of fabric parts (11, 12, 30, 32), the fabric part defining the front wall (11) having a centric opening (60; 71) to form the transition (25) to the indentation (17), and the opening (60; 71) having a slot-shaped configuration.

## Revendications

1. Module de coussin à gaz, comportant un coussin à gaz (3) dont le contour extérieur est défini par une paroi de coussin à gaz, la paroi de coussin à gaz ayant une paroi inférieure (11) destinée à l'impact du passager et un creux (17) partant de la paroi antérieure (11), qui est formé par le fait qu'un tronçon central (16) de la paroi de coussin à gaz est empêché de se mouvoir librement lors du gonflage et est retenu, le coussin à gaz (3) présentant autour du creux (17) une chambre (18) de forme annulaire à remplir de gaz,
**caractérisé en ce que**
dans le creux (17) est prévue au moins une bande de garde (20 - 24 ; 50, 52, 53) s'étendant le long du creux (17), laquelle est fixée à la paroi de coussin à gaz par son extrémité pointant hors du creux (17), en relation avec l'état gonflé.

2. Module de coussin à gaz selon la revendication 1, **caractérisé en ce que** la bande de garde (20 - 24 ; 50, 52, 53) est fixée à la paroi de coussin à gaz définissant le creux, par son extrémité pointant hors du creux (17).

3. Module de coussin à gaz selon la revendication 1 ou 2, **caractérisé en ce que** la bande de garde (20 - 24 ; 50, 52, 53) est fixée sur la paroi de coussin à gaz dans la zone de transition entre la paroi antérieure (11) et le creux (17).

4. Module de coussin à gaz selon l'une des revendications précédentes, **caractérisé en ce qu'**il est prévu plusieurs bandes de garde (20 - 24 ; 50, 52, 53) qui, pendant le gonflage, s'étendent en oblique dans le creux (17) et exercent un effet de traction latérale --sur la paroi de coussin à gaz, qui provoque une fermeture du creux (17).

5. Module de coussin à gaz selon l'une des revendications précédentes, **caractérisé en ce que** plusieurs bandes de garde (20 - 24 ; 50, 52, 53) s'étendent en forme de Y ou de X à l'état approximativement totalement gonflé du coussin à gaz, et **en ce que** l'angle de coupe (α) des bandes de garde se réduit au cours de la poursuite du gonflage jusqu'à l'état de gonflage total.

6. Module de coussin à gaz selon la revendication 5, **caractérisé en ce que** les bandes de garde (50, 52) s'étendant en forme de X sont fixées sur des bords opposés du tronçon central (16), s'étendent l'une devant l'autre en direction de la paroi antérieure (11) et sont fixées dans la région de transition entre la paroi antérieure (11) et le creux (17).

7. Module de coussin à gaz selon la revendication 6, **caractérisé en ce que** pointant vers le haut dans la vue latérale avec le creux (17), les bandes de garde (50, 52) forment un "V" inversé lorsque le coussin à gaz est totalement gonflé.

8. Module de coussin à gaz selon l'une des revendications précédentes, **caractérisé en ce qu'**une bande de garde (22) se divise en plusieurs bandes de garde (24) avant qu'elle soit attachée sur la paroi de coussin à gaz.

9. Module de coussin à gaz selon la revendication 8, **caractérisé en ce que** les plusieurs bandes de garde (24) reposent les unes contre les autres à l'état de gonflage total.

10. Module de coussin à gaz selon l'une des revendications précédentes, **caractérisé en ce que** la paroi de coussin à gaz est constituée de plusieurs parties de tissu (11, 12, 30, 32), la partie de tissu formant la paroi antérieure (11) ayant une ouverture centrale (60 ; 71) pour former la transition (25) vers le creux (17), et l'ouverture (60 ; 71) étant réalisée en forme de fente.
